# EUROPÄISCHE PATENTANMELDUNG

(11) **EP 1 471 451 A1**
(43) Veröffentlichungstag der Anmeldung: **27.10.2004**
(21) Anmeldenummer: 03009408.0
(22) Anmeldetag: 25.04.2003
(51) Int. Cl.: G06F 17/60, G07G 1/14

(54) **Verfahren zur Ausgabe von Produktinformationen und System zur Durchführung des Verfahrens**

(71) Anmelder: Online Software GmbH, 69469 Weinheim (DE)
(72) Erfinder: Reissner, Bernhard, 64668 Rimbach (DE)
(74) Vertreter: Kloiber, Thomas, Dr. Dipl.-Phys,

(57) **Zusammenfassung**

Die Erfindung betrifft ein Verfahren und eine Vorrichtung zur Ausgabe von Produktinformationen auf einem Ausgabegerät, bei dem zunächst durch geeignete Auswahlmittel die
- Auswahl eines Produktes
- Auswahl einer Ausgabeart
- Auswahl des Ausgabegerätes und
- gegebenenfalls die Auswahl einer Ausgabeanzahl erfolgt,
anschließend diese ausgewählten Daten durch eine erste Wirkverbindung zwischen dem Auswahlmittel und einem Datenverarbeitungsmittel an das Datenverarbeitungsmittel übertragen werden, wobei in dem Datenverarbeitungsmittel auf der Grundlage der ausgewählten Daten und Informationen über das ausgewählte Produkt, die in dem Datenverarbeitungsmittel gespeichert sind, eine Ausgabeinformation erstellt wird, die durch das Ausgabegerät über eine zweite Wirkverbindung zwischen dem Ausgabegerät und dem Datenverarbeitungsmittel abgerufen, gegebenenfalls weiterverarbeitet und ausgeben wird. Das Problem der ständig sich ändernden Produktinformationen, die möglichst einheitlich an allen Ausgabegeräten einer Handelskette erscheinen sollen, wird dadurch gelöst, dass das/die Ausgabegerät(e) unabhängig von dem Datenverarbeitungsmittel betrieben wird/werden.

## Beschreibung

Die vorliegende Erfindung betrifft ein Verfahren zur Ausgabe von Produktinformationen auf einem Ausgabegerät, bei dem zunächst durch geeignete Auswahlmittel die
- Auswahl eines Produktes
- Auswahl einer Ausgabeart
- Auswahl des Ausgabegerätes und
- gegebenenfalls die Auswahl einer Ausgabeanzahl erfolgt,
anschließend diese ausgewählten Daten durch eine erste Wirkverbindung zwischen dem Auswahlmittel und einem Datenverarbeitungsmittel an das Datenverarbeitungsmittel übertragen werden, wobei in dem Datenverarbeitungsmittel auf der Grundlage der ausgewählten Daten und Informationen über das ausgewählte Produkt, die in dem Datenverarbeitungsmittel gespeichert sind, eine Ausgabeinformation erstellt wird, die durch das Ausgabegerät über eine zweite Wirkverbindung zwischen dem Ausgabegerät und dem Datenverarbeitungsmittel abgerufen, gegebenenfalls weiterverarbeitet und ausgeben wird.

Die Erfindung betrifft weiterhin ein System zur Durchführung dieses Verfahrens, umfassend:
- mindestens ein Auswahlmittel zur Auswahl eines Produktes, einer Ausgabeart eines Ausgabegerätes und gegebenenfalls einer Ausgabeanzahl
- ein Datenverarbeitungsmittel, das durch mindestens eine erste Wirkverbindung mit dem/den Auswahlmittel(n) verbunden ist, und
- mindestens ein Ausgabegerät, das durch mindestens eine zweite Wirkverbindung mit dem Datenverarbeitungsmittel verbunden ist,
wobei das Datenverarbeitungsmittel eine Datenbank mit Informationen über das ausgewählte Produkt umfasst, aus welchem es eine Ausgabeinformation erstellt und das/die Ausgabegerät(e) die Ausgabeinformation gegebenenfalls weiter verarbeite(t/en) und anschließend ausgibt/ausgeben.

Solche Verfahren und Systeme bieten dem Anwender bisher die Möglichkeit, Produktinformationen vor Ort auszugeben, indem an einem Datenverarbeitungsmittel ein Produkt und eine Ausgabeart, d.h. ein bestimmtes Layout, beispielsweise Plakat/Etiketten/Präsentationen, erstellt, und anschließend an einem mit dem Datenverarbeitungsmittel verbundenen Ausgabegerät ausgegeben werden.

Die bisherigen Lösungen für die Erstellung von Produktinformationen weisen einige wesentliche Nachteile auf. So ist es beispielsweise erforderlich, daß die verschiedenen, der Produktinformation zugrunde liegenden Informationen, wie beispielsweise der Preis, die Produktbezeichnung, das Logo des Produktes oder bestimmte Erscheinungsformen und Inhaltsstoffangaben, sich ändern und ständig auf dem Datenverarbeitungsmittel in aktualisierter Form vorliegen müssen. Dies wird um so schwieriger, wenn Handelsunternehmen, die Produktinformationen erstellen wollen, ein einheitliches Erscheinungsbild und eine einheitliche Preisgestaltung sicherstellen wollen, selbst wenn sie über entfernt liegende Standorte verteilt sind.

Darüber hinaus soll die Anfertigung von Produktinformationen möglich sein, ohne dass vor Ort in jeder Handelsfiliale ausgebildetes Personal vorhanden sein muss, um die Produktinformationen zu erstellen und an den richtigen Stellen anzubringen.

Aufgabe der vorliegenden Erfindung ist es daher, ein Verfahren und eine Vorrichtung vorzugeben, bei welchem die oben genannten Probleme nicht mehr auftreten.

Die Aufgabe wird bei dem gattungsgemäßen Verfahren dadurch gelöst, dass das/die Ausgabegerät(e) unabhängig von dem Datenverarbeitungsmittel betrieben wird/werden.

Die vorliegende Erfindung wird außerdem durch das gattungsgemäße System dadurch gelöst, dass das/die Ausgabegerät(e) unabhängig von dem Datenverarbeitungsmittel arbeite(t/n).

Eine weitere vorteilhafte Ausgestaltung der Erfindung ist dadurch vorgesehen, dass die Ausgabeinformation zum Abruf durch das Ausgabegerät auf dem Datenverarbeitungsmittel bereit gestellt wird und über die zweite Wirkverbindung von dem Ausgabegerät abgerufen wird. Dadurch wird eine individuelle Steuerung der jeweiligen Ausgabegeräte möglich, die z.B. in Zeitintervallen von 1/10 Sekunde, einer Sekunde, fünf Sekunden, zehn Sekunden oder mehr auf dem Datenverarbeitungsmittel überprüfen können, ob für das jeweilige Ausgabegerät eine aktualisierte Ausgabeinformation vorliegt. Die Zeitintervalle können natürlich auch an die Ladenöffnungszeiten angepasst werden.

In einer weiteren vorteilhaften Ausführungsform der Vorrichtung ist vorgesehen, dass die Ausgabeinformation zum Abruf mit einer Kennung versehen, bereitgestellt ist,
wobei das/die Ausgabegerät(e) so ausgebildet ist/sind, dass es/sie die vom Datenverarbeitungsmittel bereitgestellte Ausgabeinformation mit der diesem Ausgabegerät zugeordneten Kennung abruf(t/en). Indem die Ausgabegeräte selbständig, d.h. mit eigener Logik die übertragene Ausgabeinformation verarbeiten und ausgeben, können die Datenverarbeitungsmittel an zentraler Stelle, beispielsweise in der Konzernzentrale oder in einem Rechenzentrum angeordnet sein.

In einer weiteren vorteilhaften Ausführungsform der vorliegenden Erfindung ist vorgesehen, dass das Ausgabegerät von dem Datenverarbeitungsmittel automatisch auf Grund der Auswahl der Ausgabeart bestimmt wird. Dies ist in vorteilhafter Ausgestaltung möglich, wenn das Ausgabegerät ein in dem Datenverarbeitungsmittel vordefiniertes Gerät (beispielsweise ein Flachbildschirm) bestimmter Größe ist.

In einer weiteren vorteilhaften Ausführungsform ist vorgesehen, dass das Auswahlmittel ein mobiles Endgerät und die erste Wirkverbindung eine Funkverbindung ist. Auf diese Weise kann die Auswahl der Produkte in den Handelsfilialen direkt am Regal oder an beliebiger Stelle erfolgen.

In einer weiteren vorteilhaften Ausführungsform ist vorgesehen, dass die Auswahl des Produkts über eine in dem Auswahlmittel integrierte Barcode- bzw. RFID-Leseeinrichtung vorgenommen wird. Dies reduziert die Fehleranfälligkeit erheblich.

In einer weiteren Ausführungsform der Erfindung ist vorgesehen, dass die Produktidentifizierung sowohl beim Auswahlmittel als auch im Datenverarbeitungsmittel über eine Produktkennziffer (EAN) bzw RFID-Nummer vorgenommen wird. Hierdurch wird eine einheitliche Verarbeitung und eine höhere Sicherheit in der Kommunikation zwischen Auswahlmittel und Datenverarbeitungsmittel erreicht.

In einer weiteren vorteilhaften Ausführungsform der Erfindung ist vorgesehen, dass das Auswahlmittel ein Endgerät mit Internet-Browser ist und die zur Auswahl stehenden Daten auf dem Datenverarbeitungsmittel als abrufbare Internet-Seite gespeichert sind, die mit dem Internet-Browser ausgewählt werden. Durch die im Internet-Browser einheitliche Benutzeroberfläche wird eine einfache Bedienung und Eingabe bzw. Auswahl der Daten durch den Anwender ermöglicht.

In einer weiteren vorteilhaften Ausgestaltung der Erfindung ist vorgesehen, dass das Auswahlmittel ein Warenwirtschaftssystem ist, in dem auf Grund einer Änderung des Preises oder einer Änderung der Produktbezeichnung Daten zu dem Datenverarbeitungsmittel übertragen werden und dort automatisch eine neue Ausgabeinformation für das entsprechende Ausgabegerät erzeugt wird.

Auf diese Art und Weise wird ein sicherer Abgleich der dem Kunden vor Ort präsentierten Produktinformation mit dem berechneten Preis oder mit der Produktbezeichnung erreicht.

In noch einer weiteren Ausführungsform der Erfindung ist vorgesehen, dass im Datenverarbeitungsmittel die Zugriffe der Ausgabegeräte auf die Ausgabeinformation protokolliert werden. Durch die Protokollierung der Produktinformationen, die dem Kunden gezeigt werden, kann eine gezielte Auswertung der Kaufbeeinflussung durch verschiedene Faktoren wie Preisgestaltung, Layout, Anbringungsart und weitere Informationen zusammen mit den Informationen der Kassensysteme ausgewertet werden. Auf diese Art und Weise kann eine Verkaufsförderung bestimmter Artikel erreicht werden.

In einer weiteren vorteilhaften Ausgestaltung der Erfindung ist vorgesehen, dass die zweite Wirkverbindung eine Internet-Verbindung ist. Auf diese Art und Weise wird vorteilhaft ein bereits bestehendes, weltweites Netzwerk verwendet.

In noch einer weiteren Ausführungsform der Erfindung ist vorgesehen, dass die auf dem Datenverarbeitungsmittel bereit gestellte Ausgabeinformation als Rohdaten bereit gestellt werden. Dies bringt den Vorteil, dass die Datenübertragung über die zweite Wirkverbindung schneller erfolgt und eine Aufbereitung der Daten im Ausgabegerät wesentlich schneller ist.

Weitere Ausgestaltungen und Vorteile der Erfindung sind den Figuren der Zeichnung, der Figurenbeschreibung und den Ansprüchen zu entnehmen.

Die Figuren zeigen im einzelnen:
- Figur 1:: ein Diagramm des Systems mit einem Auswahlmittel und einem Ausgabegerät;
- Figur 2:: ein Diagramm des Systems mit mehreren Auswahlmitteln und mehreren Ausgabegeräten;

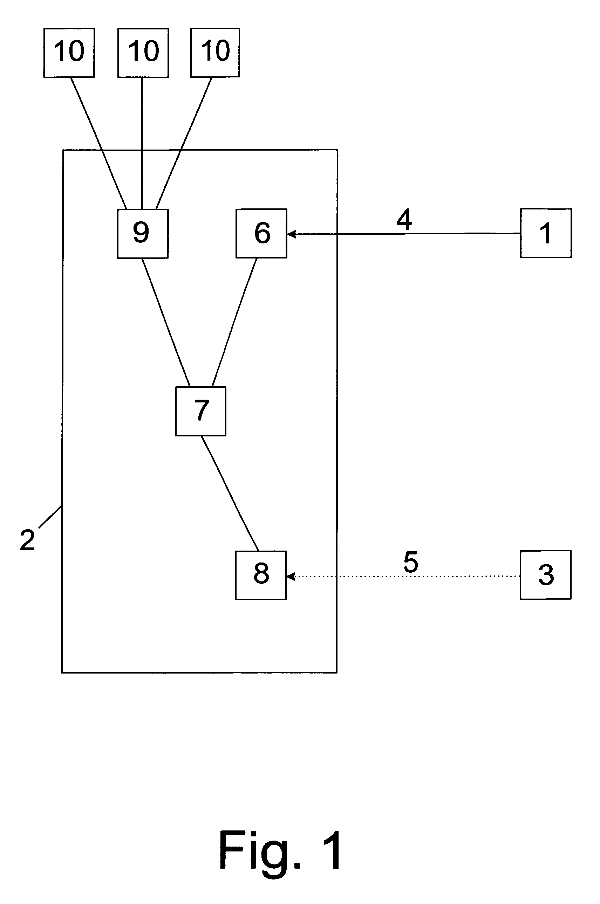

In der Figur 1 ist rechts oben ein Auswahlmittel 1 gezeigt, mit welchem eine Auswahl der zu erstellenden Produktinformation durch den Benutzer oder durch automatisierte Vorgänge wie beispielsweise die Änderung eines Preises oder einer Produktbezeichnung im Warenwirtschaftssystem erfolgt.

Als Auswahlmittel 1 kann beispielsweise ein lokaler Computer, auch als Client bezeichnet, dienen. Auf diesem können beispielsweise die zur Verfügung stehenden Produkte zur Auswahl bereit stehen. Diese können vorteilhafterweise an dem Computer mittels Barcode oder über die EAN-Produktnummer oder eine RFID-Nummer ausgewählt werden. Auf diese Weise werden Fehler vermieden und ein schnelles Bearbeiten bzw. Auswählen des Produkts ist möglich. Des Weiteren ist es erfindungsgemäß erforderlich, an dem Computer die gewünschte Ausgabeart bzw. das gewünschte Ausgabegerät auszuwählen. Aus der Wahl des Ausgabegeräts kann sich bereits eine notwendige Ausgabeart ergeben, wenn beispielsweise als Ausgabegerät ein Flachbildschirm, vorzugsweise ein LCD-Display, verwendet wird.

Wenn als Ausgabegerät beispielsweise ein Drucker oder Plotter verwendet wird, muss am Computer bzw. dem Auswahlmittel noch die Anzahl der gewünschten Ausdrucke gewählt werden.

Noch benutzerfreundlicher kann das System bzw. Verfahren ausgeführt werden, wenn als Auswahlmittel ein mobiler Computer, beispielsweise Laptop oder Handheld verwendet wird, der dieselben Funktionen wie der o.g. Computer aufweisen muss. Darüber hinaus kann dieses mobile Endgerät noch ein Modul aufweisen, das die Auswahl des Ausgabegeräts erleichtert, indem an dem Ausgabegerät eine Kennung angebracht ist, die von dem Laptop oder Handheld gelesen bzw. gescannt werden kann. Bei dieser Kennung kann es sich vorteilhafterweise um einen Barcode bzw. RFID oder um einen Zifferncode handeln.

Das Auswahlmittel 1 ist über eine erste Wirkverbindung 4 mit einem Auswahldaten-Empfangseinrichtung 6, das in dem Datenverarbeitungsmittel 2 angeordnet ist, verbunden. Die erste Wirkverbindung 4 kann sowohl durch eine Netzwerkverkabelung als auch durch eine Funkanbindung oder je nach Entfernung durch Mobilfunk (beispielsweise eine UMTS-Verbindung) an die Auswahldaten-Empfangseinrichtung 6 angeschlossen sein. Die Auswahldaten-Empfangseinrichtung 6 speichert die empfangenen Auswahldaten in dem Datenverarbeitungsmittel 2. Die Auswahldaten-Empfangseinrichtung 6 kann in vorteilhafter Weise auch aus einer Internet-Seite bestehen, die dem Anwender auf dem Auswahlmittel 1 die zur Verfügung stehenden Auswahlmöglichkeiten anbietet. Auf diese Weise ist ein einheitliches Erscheinungsbild der Auswahlmöglichkeiten gewährleistet und eine redundante Speicherung der Auswahldaten und zur Verfügung stehenden Auswahlmöglichkeiten auf dem Auswahlmittel 1 ist nicht erforderlich.

Bei dem Datenverarbeitungsmittel 2 handelt es sich beispielsweise um eine Firmenrechenzentrale oder einen oder mehrere Computer, auch als Server oder Serververbund bezeichnet. Dieser beinhaltet weiter eine Datenbank 9, die alle übrigen, für die Erstellung einer Produktinformation notwendigen Rohdaten enthält. Diese Rohdaten sind beispielsweise Layout-Vorlagen, Formulare, Graphiken, Artikelbezeichnungen, Inhaltsstoffbezeichnungen usw., die von außen durch verschiedene Datenbank-Informationsquellen 10 mit den genannten Informationen versorgt werden. Bei diesen Datenbank-Informationsquellen 10 kann es sich beispielsweise um ein Warenwirtschaftssystem, eine Marketing-Abteilung, eine Softwarefirma oder um einen weiteren Dienstleister (z.B. Bildagentur oder Designbüro) handeln.

Die Daten aus der Auswahldaten-Empfangseinrichtung und der Datenbank werden von der Software 7 automatisch zu einer Produktinformation zusammengestellt, sobald ein entsprechender Befehl erhalten wurde. Dieser Befehl kann entweder durch eine Bestätigung am Auswahlmittel oder durch sonstige Änderungen von Informationen in der Datenbank 9 ausgelöst werden.

Die Software 7 überträgt die Produktinformation an eine Bereitstellungs-Einrichtung 8, die ebenfalls in dem Datenverarbeitungsmittel 2 angeordnet sein kann. Die Produktinformation wird in der Bereitstellungs-Einrichtung 8 in einer Form bereitgestellt, die je nach Ausgabegerät 3 verschieden sein kann. In vorteilhafter Weise kann die Produktinformation auch als Rohdaten, beispielsweise ASCII oder ANSI oder Unicode bereit gestellt werden, so dass die Übertragung über die zweite Wirkverbindung 5, die meist den Engpass darstellt, um ein vielfaches schneller erfolgen kann. Die zweite Wirkverbindung 5 kann aus den gleichen Elementen wie die erste Wirkverbindung 4 bestehen.

Die fertige Produktinformation kann entweder bereits in der Bereitstellungs-Einrichtung 8 vorliegen. Dies ist der Fall, wenn es sich bei dem Ausgabegerät 3 um einen einfachen Drucker ohne Software oder Prozessor zur Umwandlung der Rohinformation handelt. Es kann sich jedoch auch um einen intelligenten Drucker oder um ein Display mit eigener Intelligenz handeln, so dass die bereit gestellten Rohdaten erst in dem Ausgabegerät 3 verarbeitet werden. Die Übertragung kann selbstverständlich auch in komprimierter Form erfolgen.

Weiterhin ist es mit diesem System bzw. Verfahren in besonders vorteilhafter Weise möglich, bewegte Bilder oder Sequenzen als Bestandteile der Ausgabeinformation oder Produktinformation auf dem Ausgabegerät 3 auszugeben.

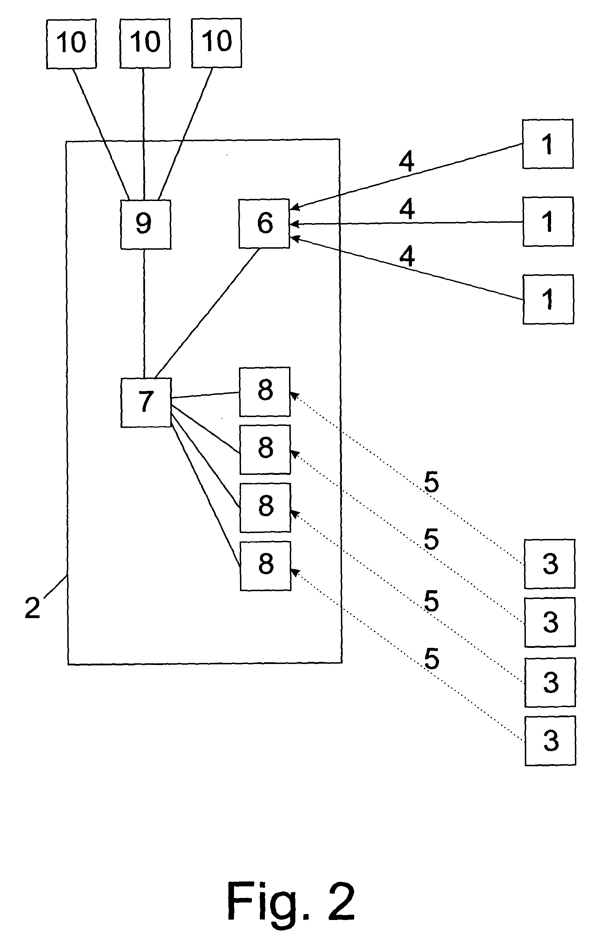

In der Figur 2 ist im Unterschied zu Figur 1 eine beliebige Vielzahl von Auswahlmitteln 1, die jeweils mit einer ersten Wirkverbindung 4 mit der Auswahldaten-Empfangseinrichtung 6 des Datenverarbeitungsmittels 2 verbunden sind. Die Auswahlmittel 1 übertragen die Auswahldaten zu der Auswahldaten-Empfangseinrichtung 6, die beispielsweise über die jeweilige Produktkennung oder über die Kennung des Ausgabegeräts 3 in gleicher Weise wie in Figur 1 beschrieben, weiter verarbeitet werden und von der Software 7 an die entsprechende Bereitstellungs-Einrichtung 8 übertragen werden. Eine beliebige Vielzahl von Ausgabegeräten 3 ist jeweils über zweite Wirkverbindungen 5 mit der oder den Bereitstellungs-Einrichtungen 8 verbunden, wo sie über eine Kennung die für das jeweilige Ausgabegerät 3 vorgesehene Produktinformation abrufen.

Wie bereits erwähnt, kann es sich bei der Bereitstellungs-Einrichtung 8, ähnlich wie bei der Auswahldaten-Empfangseinrichtung 6, um eine einheitliche Einrichtung handeln, auf die von allen Auswahlgeräten 3 zugegriffen wird, wobei die die Unterscheidung, welche Information für das jeweilige Ausgabegerät 3 bestimmt ist, durch die entsprechende Kennung des Ausgabegeräts 3 erfolgt.

Eine weitere Funktion, die entweder in der Software 7 oder in der Bereitstellungs-Einrichtung 8 erfasst werden kann, ist die Erstellung eines Logfiles, der Informationen über die abgerufenen Produktinformationen erfasst und zur Auswertung durch die Software 7 bereitstellt.

### Bezugszeichenliste

- 1: Auswahlmittel
- 2: Datenverarbeitungsmittel
- 3: Ausgabegerät(e)
- 4: erste Wirkverbindung
- 5: zweite Wirkverbindung
- 6: Auswahldaten-Empfangseinrichtung
- 7: Software
- 8: Bereitstellungseinrichtung
- 9: Datenbank
- 10: Datenbank-Informationsquelle

## Patentansprüche

1. Verfahren zur Ausgabe von Produktinformationen auf einem Ausgabegerät, bei dem zunächst durch geeignete Auswahlmittel die
- Auswahl eines Produktes
- Auswahl einer Ausgabeart
- Auswahl des Ausgabegerätes und
- gegebenenfalls die Auswahl einer Ausgabeanzahl erfolgt,
anschließend diese ausgewählten Daten durch eine erste Wirkverbindung zwischen dem Auswahlmittel und einem Datenverarbeitungsmittel an das Datenverarbeitungsmittel übertragen werden, wobei in dem Datenverarbeitungsmittel auf der Grundlage der ausgewählten Daten und Informationen über das ausgewählte Produkt, die in dem Datenverarbeitungsmittel gespeichert sind, eine Ausgabeinformation erstellt wird, die durch das Ausgabegerät über eine zweite Wirkverbindung zwischen dem Ausgabegerät und dem Datenverarbeitungsmittel abgerufen, gegebenenfalls weiterverarbeitet und ausgeben wird, **dadurch gekennzeichnet, dass** das/die Ausgabegerät(e) unabhängig von dem Datenverarbeitungsmittel betrieben wird/werden.

2. Verfahren nach Anspruch 1, **dadurch gekennzeichnet, dass** die Ausgabeinformation zum Abruf durch das Ausgabegerät auf dem Datenverarbeitungsmittel bereit gestellt wird und über die zweite Wirkverbindung von dem Ausgabegerät abgerufen wird.

3. Verfahren nach einem der vorhergehenden Ansprüche, **dadurch gekennzeichnet, dass** das Ausgabegerät von dem Datenverarbeitungsmittel automatisch auf Grund der Auswahl der Ausgabeart bestimmt wird.

4. Verfahren nach einem der vorhergehenden Ansprüche, **dadurch gekennzeichnet, dass** die Auswahl des Produkts über eine in dem Auswahlmittel integrierte Barcode- oder RFID -Leseeinrichtung vorgenommen wird.

5. Verfahren nach einem der vorhergehenden Ansprüche, **dadurch gekennzeichnet, dass** die Produktidentifizierung sowohl beim Auswahlmittel als auch im Datenverarbeitungsmittel über eine Produktkennziffer (EAN oder RFID-Nummer) vorgenommen wird.

6. Verfahren nach einem der vorhergehenden Ansprüche, **dadurch gekennzeichnet, dass** im Datenverarbeitungsmittel die Zugriffe der Ausgabegeräte auf die Ausgabeinformation protokolliert werden.

7. Verfahren nach einem der vorhergehenden Ansprüche, **dadurch gekennzeichnet, dass** die auf dem Datenverarbeitungsmittel bereitgestellte Ausgabeinformation als Rohdaten bereit gestellt werden.

8. System zur Durchführung des Verfahrens nach Anspruch 1, umfassend:
- mindestens ein Auswahlmittel (1) zur Auswahl eines Produktes, einer Ausgabeart eines Ausgabegerätes (3) und gegebenenfalls einer Ausgabeanzahl
- ein Datenverarbeitungsmittel (2), das durch mindestens eine erste Wirkverbindung (4) mit dem/den Auswahlmittel(n) (1) verbunden ist, und
- mindestens ein Ausgabegerät (3), das durch mindestens eine zweite Wirkverbindung (5) mit dem Datenverarbeitungsmittel (2) verbunden ist,
wobei das Datenverarbeitungsmittel (2) eine Datenbank (9) mit Informationen über das ausgewählte Produkt umfasst, aus welchem es eine Ausgabeinformation erstellt und das/die Ausgabegerät(e) (3) die Ausgabeinformation gegebenenfalls weiter verarbeite(t/en) und anschließend ausgibt/ausgeben, **dadurch gekennzeichnet, dass** das/die Ausgabegerät(e) (3) unabhängig von dem Datenverarbeitungsmittel (2) arbeite(t/n).

9. System nach Anspruch 8, **dadurch gekennzeichnet, dass** die Ausgabeinformation zum Abruf durch das/die Ausgabegerät(e) (3) auf dem Datenverarbeitungsmittel (2) bereit gestellt wird und über die zweite Wirkverbindung (5) von dem Ausgabegerät (3) abgerufen wird.

10. System nach einem der Ansprüche 8 oder 9, **dadurch gekennzeichnet, dass** die Ausgabeinformation mit einer Kennung versehen zum Abruf bereitgestellt ist,
wobei das/die Ausgabegerät(e) (3) so ausgebildet ist/sind, dass es/sie die vom Datenverarbeitungsmittel (2) bereitgestellte Ausgabeinformation mit der diesem Ausgabegerät (3) zugeordneten Kennung abruf(t/en).

11. System nach einem der Ansprüche 8 bis 10, **dadurch gekennzeichnet, dass** das/die Auswahlmittel (1) ein mobiles Endgerät und die erste Wirkverbindung (4) eine Funkverbindung ist.

12. System nach einem der Ansprüche 8 bis 11, **dadurch gekennzeichnet, dass** das Auswahlmittel (1) eine Barcode- oder RFID-Leseeinrichtung zur Auswahl des Produktes aufweist.

13. System nach einem der Ansprüche 8 bis 12, **dadurch gekennzeichnet, dass** die Produktidentifizierung sowohl beim Auswahlmittel (1) als auch im Datenverarbeitungsmittel (2) über eine Produktkennziffer (EAN oder RFID-Nummer) erfolgt.

14. System nach einem der Ansprüche 8 bis 13, **dadurch gekennzeichnet, dass** das Auswahlmittel (1) ein Endgerät mit Internet-Browser ist und die zur Auswahl stehenden Daten auf dem Datenverarbeitungsmittel (2) als abrufbare Internet-Seite zur Auswahl mit dem Internet-Browser gespeichert sind.

15. System nach Anspruch 8, **dadurch gekennzeichnet, dass** das Auswahlmittel (1) ein Warenwirtschaftssystem ist, in dem auf Grund einer Änderung des Preises, einer Änderung der Produktbezeichnung oder einer Änderung der Artikel/Vorlagenzuordnung Daten zu dem Datenverarbeitungsmittel (2) übertragen werden und dort automatisch eine neue Ausgabeinformation für das entsprechende Ausgabegerät (3) erzeugt wird.
